# EUROPÄISCHE PATENTANMELDUNG

(11) **EP 1 635 436 A1**
(43) Veröffentlichungstag der Anmeldung: **15.03.2006**
(21) Anmeldenummer: 05018872.1
(22) Anmeldetag: 31.08.2005
(51) Int. Cl.: H02G 3/18, H02G 3/04

(54) **Energiesäule**

(30) Priorität: 08.09.2004 DE 202004013935 U
(71) Anmelder: Tehalit GmbH, 67716 Heltersberg (DE)
(72) Erfinder: Schmitt, Erwin, 67659 Kaiserslautern (DE); Schnurr, Richard, 66957 Vinningen (DE)
(74) Vertreter: Patentanwälte Möll und Bitterich

(57) **Zusammenfassung**

Gegenstand der Erfindung ist eine Energiesäule (13), die bei Bedarf Elektroinstallationsgeräte, zum Beispiel Steckdosen (14), zur Verfügung stellt und bei Nichtbedarf im Boden versenkt werden kann. Zu diesem Zweck ist eine Wanne (10) vorgesehen, in der die Energiesäule (13) mit Hilfe eines Gelenks schwenkbar befestigt ist. Abgedeckt wird die Wanne (10) von einem zweiteiligen Deckel (11, 12), der die aufgerichtete Energiesäule (13) von hinten gegen Umfallen stützt.

## Beschreibung

Die Erfindung betrifft Energiesäulen zum Aufstellen in Räumen zwecks Bereitstellung von Elektroinstallationsgeräten gemäß dem Oberbegriff des Anspruchs 1.

Derartige Energiesäulen sind bekannt. Man vergleiche beispielsweise FR 27 27 577 A, FR 22 90 064 A, GB 14 53 952 A, EP 0 514 862 A oder EP 0 828 326 B. Ursprünglich waren diese Energiesäulen raumhoch, wobei die elektrischen Kabel und Leitungen von der Decke aus zugeführt wurden. Inzwischen gibt es diese Energiesäulen auch in geringeren Höhen, wobei die elektrischen Kabel und Leitungen vom Boden aus zugeführt werden.

Wird eine einmal installierte Energiesäule nicht mehr benötigt, so muss sie demontiert werden, was wegen der elektrischen Kabel und Leitungen nur von ausgebildetem Fachpersonal durchgeführt werden kann. Andernfalls bleibt die Energiesäule unbenutzt stehen und stört. Das ist unbefriedigend.

Der vorliegenden Erfindung liegt die Aufgabe zugrunde, eine Energiesäule der eingangs genannten Art anzugeben, die bei Nichtgebrauch problemlos zum Verschwinden gebracht werden kann.

Diese Aufgabe wird gelöst durch eine Energiesäule mit den Merkmalen des Anspruchs 1.

Die vorliegende Erfindung besitzt neben der Säule mit den Installationsgeräten und den Kabeln und Leitungen eine im Boden versenkbare und verankerbare Wanne, die die Energiesäule bei Nichtgebrauch aufnimmt. Ein Deckel deckt die Wanne ab, so dass die deaktivierte Säule nicht sichtbar ist und nicht stört. Zum Aktivieren wird die Säule aus der Wanne herausgeschwenkt. Anschließend wird der Deckel wieder geschlossen, was dank dessen Zweiteiligkeit problemlos geht. Durch geschickte Aufteilung des Deckels kann dieser die aktivierte Säule von hinten so stützen, dass sie problemlos stehen bleibt.

Gemäß einer Ausgestaltung der Erfindung ist der Deckel an der Wanne angelenkt. Dies erleichtert die Handhabung und verhindert einen etwaigen Verlust.

Auch die beiden Deckelteile sind vorzugsweise mittels Gelenk miteinander verbunden.

Vorteilhafterweise besitzt die Wanne einen umlaufenden flachen Rand. Dieser Rand legt sich über die angrenzenden Boden- oder Wandteile und kaschiert so einen etwaigen unschönen Stoß.

Schließlich besitzt die Wanne Öffnungen zum Einführen der gebäudeseitigen Verkabelung.

Um bei geschlossenem Deckel Kabel und Leitungen in die Wanne einführen zu können, kann am freien Ende des Deckels eine Bürste angeordnet werden. Alternativ ist auch eine Aussparung möglich.

Anhand der Zeichnung soll die Erfindung in Form eines Ausführungsführungsbeispiels näher erläutert werden. Es zeigen
- Fig. 1: die verschlossene Wanne der Energiesäule, eingelassen im Boden,
- Fig. 2: einen Längsschnitt durch die Wanne der Fig. 1,
- Fig. 3: die Wanne der Fig. 1 mit teilweise geöffnetem Deckel,
- Fig. 4: die Wanne der Fig. 1 mit komplett geöffnetem Deckel und teilweise herausgeschwenkter Säule,
- Fig. 5: Wanne und Deckel der Fig. 4 mit ganz herausgeschwenkter Säule und
- Fig. 6: die Wanne der Fig. 5 mit wieder geschlossenem Deckel.

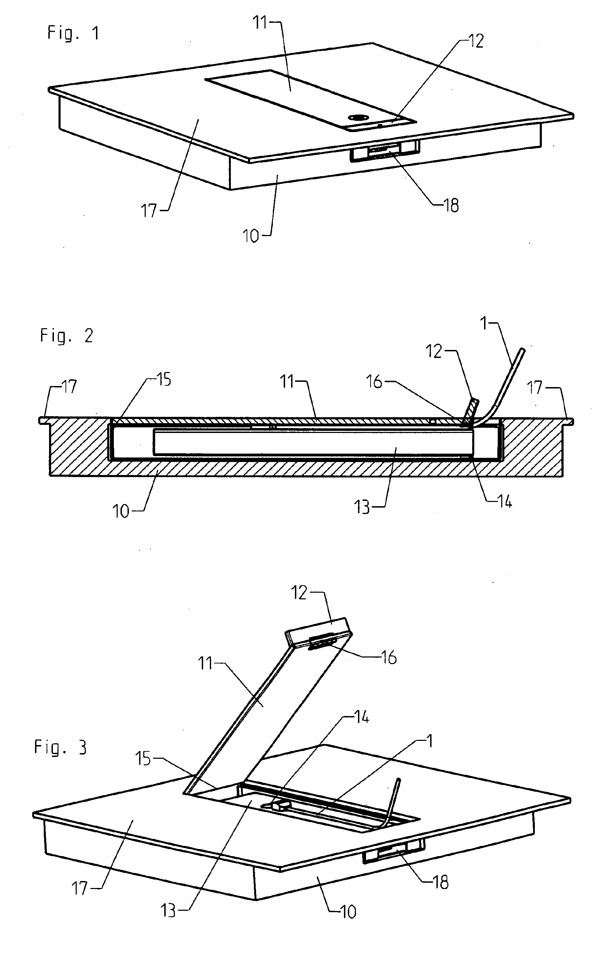

Fig. 1 zeigt eine etwa parallelepipedische Wanne 10 mit umlaufendem Rand 17. Die Wanne 10 ist mit einem zweiteiligen Deckel 11, 12 verschlossen. Wanne 10, 17 und Deckel 11, 12 können bodengleich eingebaut werden.

Öffnungen 18 ermöglichen das Einführen einer Verkabelung.

Fig. 2 zeigt einen Längsschnitt durch Fig. 1. Man erkennt die Wanne 10, an deren einer Stirnseite über ein Gelenk 15 das erste Deckelelement 11 angelenkt ist. Am ersten Deckelelement 11 ist über ein weiteres Gelenk 16 das zweite Deckelelement 12 angelenkt.

Im Inneren der Wanne 10 erkennt man eine Säule 13, die über ein Gelenk 14 am Boden der Wanne 10 schwenkbar befestigt ist. Die Säule 13 trägt in diesem Ausführungsbeispiel als Beispiele für Elektroinstallationsgeräte zwei Steckdosen 14, in die eine flexible Anschlussleitung 1 eingesteckt ist. Dank des zweiten Deckelelementes 12 können die Anschlussleitungen 1 aus der Wanne 10 herausgeführt werden, auch wenn die Säule 13 deaktiviert ist. Es besteht die Möglichkeit, am freien Ende des zweiten Deckelelements 12 eine Aussparung mit oder ohne Bürste anzubringen, die als Kabelauslass dient.

Fig. 3 zeigt den Beginn des Aufstellens der Säule 13. Hierzu wird der Deckel 11, 12 geöffnet.

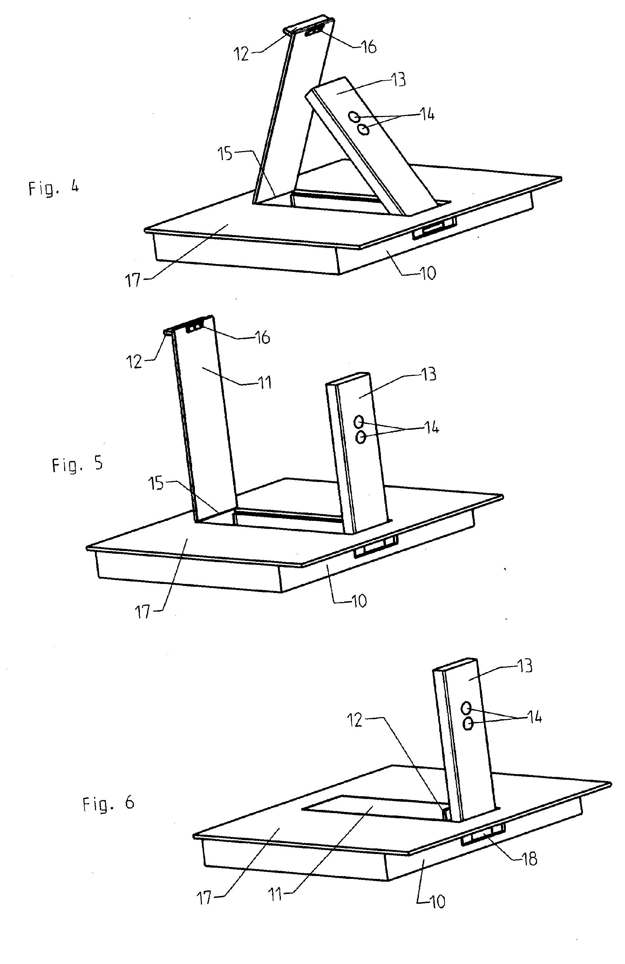

Fig. 4 zeigt den Deckel 11, 12 in geöffneter Position und den Beginn des Herausschwenkens der Säule 13. Die Säule 13 selbst kann als Kabelkanal mit Deckel ausgebildet sein.

Fig. 5 zeigt Deckel 11, 12 und Säule 13 in der völlig geöffneten Position.

Fig. 6 zeigt den Endzustand. Der Deckel 11, 12 ist geschlossen, wobei das zweite Deckelelement 12 hochgeklappt bleibt und so Platz für die Säule 13 schafft. Das erste Deckelelement 11 stützt die Säule 13 von hinten und verhindert, dass diese nach hinten wegkippen kann.

## Patentansprüche

1. Energiesäule zum Aufstellen in Räumen zwecks Bereitstellung von Elektroinstallationsgeräten - Steckdosen (14), Sicherungsautomaten, Schalter etc. - in beliebigen Höhen, umfassend
- eine Säule (13) mit
- einem Kabelkanal für elektrische Leitungen,
- und wenigstens einer Aufnahme für ein Elektroinstallationsgerät,
**gekennzeichnet durch**
- eine Wanne (10), angepasst an die Säule (13),
- einen zweiteiligen Deckel (11, 12), der die Wanne (10) verdeckt,
- die Säule (13) ist mittels Gelenk (14) am Boden der Wanne (10) befestigt.

2. Energiesäule nach Anspruch 1, **dadurch gekennzeichnet, dass** der Deckel (11, 12) an der Wanne (10) angelenkt ist.

3. Energiesäule nach Anspruch 1 oder 2, **dadurch gekennzeichnet, dass** die beiden Deckelteile (11, 12) mittels Gelenk (16) miteinander verbunden sind.

4. Energiesäule nach einem der Ansprüche 1 bis 3, **dadurch gekennzeichnet, dass** der Deckel (11, 12) die aufgestellte Säule (13) stützt.

5. Energiesäule nach einem der Ansprüche 1 bis 4, **dadurch gekennzeichnet, dass** die Wanne (10) einen umlaufenden, flachen Rand (17) besitzt.

6. Energiesäule nach einem der Ansprüche 1 bis 5, **dadurch gekennzeichnet, dass** die Wanne (10) Öffnungen (18) zum Einführen der gebäudeseitigen Verkabelung besitzt.

7. Energiesäule nach einem der Ansprüche 1 bis 6, **dadurch gekennzeichnet, dass** am freien Ende des Deckels (11, 12) eine Bürste als Kabelauslass angeordnet ist.

8. Energiesäule nach einem der Ansprüche 1 bis 6, **dadurch gekennzeichnet, dass** am freien Ende des Deckels (11, 12) eine Aussparung als Kabelauslass angeordnet ist.

9. Energiesäule nach einem der Ansprüche 1 bis 8, **dadurch gekennzeichnet, dass** die Wanne (10) im Boden versenkbar und verankerbar ist.
